# FASCICULE DE BREVET EUROPEEN

(11) **EP 0 504 376 B1**
(45) Date de publication et mention de la délivrance du brevet: **03.01.1996**
(21) Numéro de dépôt: 91918795.5
(22) Date de dépôt: 08.10.1991
(51) Int. Cl.: H04N 7/24

(54) **DISPOSITIF DE CODAGE DE SIGNAUX NUMERIQUES CORRESPONDANT A DES IMAGES DE TELEVISION ET DISPOSITIF DE DECODAGE CORRESPONDANT**
GERÄT ZUR KODIERUNG VON FERNSEHBILDERN MIT ENTSPRECHENDEN DIGITALEN SIGNALEN UND ENTSPRECHENDE DEKODIERUNGSEINRICHTUNG
CODING SYSTEM FOR DIGITAL SIGNALS CORRESPONDING TO TELEVISION PICTURES AND CORRESPONDING DECODING SYSTEM

(30) Priorité: 09.10.1990 FR 9012413; 18.12.1990 FR 9015823; 21.06.1991 FR 9107656; 09.07.1991 FR 9108588
(43) Date de publication de la demande: 23.09.1992
(73) Titulaire: LABORATOIRES D'ELECTRONIQUE PHILIPS, F-94450 Limeil-Brévannes (FR); Philips Electronics N.V., NL-5621 BA Eindhoven (NL)
(72) Inventeur: DUFOUR, Cécile, F-75012 Paris (FR); NOCTURE, Gilles, F-94270 L'Hay-les-Roses (FR)
(74) Mandataire: Kooiman, Josephus Johannes Antonius
(86) Numéro de dépôt international: NL9100191
(87) Numéro de publication internationale: WO9206563

(56) Documents cités:
- EP-A- 0 418 952
- WO-A-90/10353
- FR-A- 2 638 926
- US-A- 4 969 040
- ICC '90, Conference Record, Atlanta, GA, 15-19 avril 1990, vol. 4, IEEE, (New York, US), M. BARBERO et al.: "Bit rate reduction techniques based on DCT for HDTV transmission", pages 1607-1611
- IEEE, International Symposium on Circuits and Systems, New Orleans, LA, 1-3 mai 1990, vol. 3, IEEE, (New York, US), Y. YASHIMA et al.: "HDTV/standard-TV compatible coding based on DCT", pages 1895-1898
- Colloque TVHD 90, Ottawa, 25-29 juin 1990, M. VETTERLI et al.: "Techniques de multirésolution et leur application à la TVHD", pages 3B.2.1-3B.2.10

## Description

La présente invention concerne un dispositif de codage de signaux numériques correspondant à des images de télévision de définition déterminée, comprenant :
(A) un étage de sélection du mode de codage des signaux à coder à partir d'une part des signaux courants d'entrée du dispositif de codage et d'autre part de signaux prédits sur la base de précédents signaux d'entrée du dispositif, ledit étage délivrant les signaux à coder et des informations de mode de codage ;
(B) un étage de codage ;
(C) un étage de reconstruction d'image, dans une première voie de reconstruction d'image selon ladite définition déterminée ;
(D) un étage d'estimation de mouvement entre images, délivrant des informations de mouvement ;
(E) un étage de prédiction à partir des signaux de sortie desdits étages de reconstruction d'image et d'estimation de mouvement, les signaux de sortie dudit étage de prédiction constituant lesdits signaux prédits envoyés vers ledit étage de sélection de mode de codage.

La présente invention concerne également un dispositif de décodage de signaux numériques codés préalablement transmis et/ou stockés après traitement dans un dispositif de codage de signaux numériques correspondant à des images de télévision de définition déterminée, ledit dispositif de codage comprenant :
(a) un étage de sélection du mode de codage des signaux à coder à partir d'une part des signaux courants d'entrée dudit dispositif de codage et d'autre part de signaux prédits sur la base de précédents signaux d'entrée de ce dispositif, ces signaux d'entrée courants ou précédents étant considérés par blocs de taille déterminée opérant une subdivision des images et traités indépendamment ;
(b) un étage de codage ;
(c) un étage de reconstruction d'image d'une part selon ladite définition déterminée et d'autre part selon une définition dite réduite ;
(d) un étage d'estimation de mouvement entre images ;
(e) pour fournir lesdits signaux prédits, un étage de prédiction à partir des signaux de sortie desdits étages de reconstruction d'image et d'estimation de mouvement, les informations dites additionnelles et relatives au mouvement estimé entre images et au mode de codage sélectionné étant, comme les signaux codés, destinées à être transmises et/ou stockées.

Cette invention trouve une application avantageuse dans le domaine de la réception d'images de télévision selon deux niveaux de définition, pour assurer la restitution d'images à haute définition avec une excellente qualité d'image, tout en permettant aux récepteurs de télévision classiques, de définition plus faible, de recevoir quand même ces programmes à haute définition.

La distribution d'images numériques de télévision à haute définition constitue à l'heure actuelle un axe de recherche très actif. Il est cependant très vite apparu aux industriels concernés que ce nouveau service n'aurait de succès que si les programmes à haute définition pouvaient être reçus non seulement par les récepteurs de télévision à haute définition, mais aussi par les récepteurs classiques.

Une telle distribution, dite "compatible", est effectivement assurée si une fraction du flot des données qui correspondent au programme à haute définition peut facilement être prélevée et traitée par le récepteur classique pour que celui-ci délivre les images de télévision normales (dites compatibles : 625 lignes, 50 Hz, 2:1, rapport 16/9). Cette solution technique permet de distribuer simultanément des programmes de télévision classiques et des programmes de télévision à haute définition, avec une économie certaine en matière de débit d'informations (le débit ainsi économisé est pratiquement celui qui correspondrait à la distribution des images TV seules).

La séparation du flot des données à haute définition en deux parties, correspondant d'une part aux seules données dites compatibles (qu'on appellera par la suite les informations TV) et d'autre part aux données complémentaires dites additionnelles (concernant les images à haute définition et qu'on appellera par la suite les informations HD ou HDTV), constitue bien entendu une contrainte au niveau du codeur à haute définition (ou codeur HD) présent à l'émission, puisque l'ensemble du flot des données doit contenir les informations permettant ultérieurement la reconstruction des images compatibles. La mise en place de ces informations peut, en particulier, conduire à une dégradation de la qualité des images à haute définition.

La solution qui semble actuellement la meilleure pour assurer cette distribution compatible repose sur l'emploi d'un codeur utilisant une transformation orthogonale, telle qu'une transformation cosinus discrète (notée DCT), qui opère sur chaque image divisée en blocs. La reconstruction des images compatibles à partir des données à haute définition est obtenue à l'aide d'un découpage dans le domaine fréquentiel : pour chaque bloc d'image à haute définition sur lequel est réalisée la tranformation orthogonale, on ne transmet au décodeur d'images compatibles (ou décodeur TV), parmi les coefficients résultant de cette transformation, que ceux correspondant aux fréquences les plus faibles. Les coefficients ainsi sélectionnés deviennent les coefficients constitutifs de nouveaux blocs d'image de dimensions ici deux fois plus faibles que celles des précédents dans chaque direction horizontale et verticale.

Les images compatibles ainsi obtenues restent de bonne qualité tant que les décodeurs TV n'incorporent pas de dispositifs de compensation de mouvement. Lorsque de tels dispositifs sont prévus, une prédiction préalable du mouvement est nécessaire, et celle-ci doit être effectuée avec la résolution de la haute définition pour maintenir la qualité d'image lors du décodage des images à haute définition. On constate cependant une certaine discordance entre le contenu des blocs ainsi prédits lors du codage et du décodage à haute définition et celui des blocs prédits dans le cas du décodage des images compatibles. Des effets de dégradation de la qualité des images compatibles se produisent alors, et qui sont, en outre, cumulatifs, du fait de la récursivité du dispositif.

Un premier but de l'invention est de proposer un dispositif de codage de signaux numériques correspondant à des images de télévision, grâce auquel il est possible de remédier à ces inconvénients.

L'invention concerne à cet effet un dispositif de codage tel que défini dans le préambule et caractérisé en ce que lesdits signaux numériques sont considérés par blocs de taille déterminée opérant une subdivision des images et traités indépendamment, en ce que l'étage de reconstruction d'image comprend également une deuxième voie de reconstruction d'image selon une définition dite réduite, située en parallèle sur ladite première voie, et en ce que l'étage de prédiction comprend un circuit de reconstitution d'image par combinaison des signaux de sortie desdites première et deuxième voies de reconstruction.

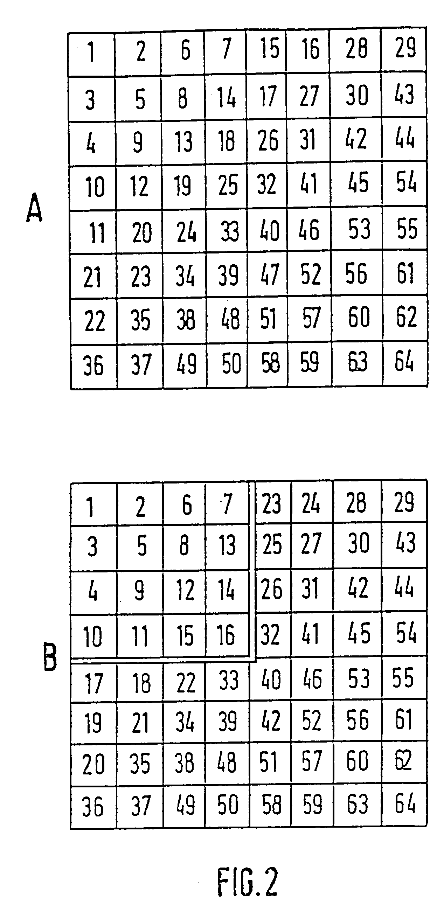

Le document "Coding television signals at 320 and 64 kbits/s", G.Kummerfeldt et al., Proceedings of the SPIE, décembre 1985, Cannes (France), volume 594, Image Coding, pages 119-128, décrit, notamment sur sa figure 2, un dispositif de codage (ici à longueur variable) faisant appel à une reconstruction d'image et à une prédiction des signaux à coder à partir de ladite reconstruction. Un tel dispositif ignore cependant complètement le problème qui consiste, dans le cas d'une distribution d'images à deux niveaux de définition, à délivrer les informations simultanément nécessaires pour la transmission et la reconstitution, côté réception, d'images de télévision selon ces deux niveaux de définition, et notamment d'images de télévision à haute définition et d'images de télévision compatibles. La structure ici proposée constitue au contraire une solution technique satisfaisante à ce problème.

Dans un mode de réalisation particulier, dans lequel on opère essentiellement à partir de signaux correspondant aux points d'image, l'invention concerne un dispositif de codage, dans lequel l'étage de codage est une chaîne de codage à longueur variable comprenant un circuit de transformation orthogonale, un circuit de conversion de balayage, un circuit de quantification, un circuit de codage à longueur variable, un circuit de mémorisation et un circuit de régulation de débit et dans lequel la première voie de l'étage de reconstruction comprend en série :
(a) un circuit de quantification inverse ;
(b) un circuit de conversion de balayage inverse ;
(c) un étage de transformation orthogonale inverse ;
(d) un circuit de reconstruction du signal selon ladite définition déterminée, tel qu'il serait décodé après transmission, aux erreurs de transmission près ;
caractérisé en ce que, dans ledit étage de reconstruction d'image, la deuxième voie de reconstruction comprend :
(a) ledit circuit de quantification inverse ;
(b) ledit circuit de conversion de balayage inverse ;
(c) un circuit de troncature pour prélever une fraction déterminée des signaux présents en sortie dudit circuit de quantification inverse ;
(d) un circuit de transformation orthogonale inverse ;
(e) un circuit de reconstruction du signal à définition réduite tel qu'il serait décodé après transmission, aux erreurs de transmission près ;
(f) une mémoire de stockage dudit signal reconstruit ;
(g) entre la sortie de ladite mémoire et ledit circuit de reconstruction du signal à définition réduite, un circuit de compensation de mouvement ;
et en ce que ledit circuit de reconstitution d'image comprend :
(h) un multiplieur de la sortie de la première voie de reconstruction par un coefficient α compris entre 0 et 1;
(i) un multiplieur de la sortie de la deuxième voie de reconstruction, par le coefficient (1-α), un circuit de rééchantillonnage et de remise en phase étant inséré entre ladite sortie de la deuxième voie de reconstruction et l'entrée correspondante du multiplieur associé ;
(j) un additionneur des sorties desdits multiplieurs ;
(k) une mémoire dite de pondération, pour le stockage de la sortie dudit additionneur ;
(ℓ) un circuit de prédiction prévu pour recevoir d'une part la sortie de ladite mémoire de pondération et d'autre part les informations de mouvement délivrées par ledit étage d'estimation de mouvement.

Dans un deuxième mode de réalisation, dans lequel on opère essentiellement à partir des coefficients résultant d'une transformation orthogonale desdits signaux correspondant aux points d'image, l'invention concerne plus particulièrement un dispositif de codage, dans lequel l'étage de codage est une chaîne de codage à longueur variable comprenant un circuit de quantification, un circuit de codage à longueur variable, un circuit de mémorisation et un circuit de régulation de débit, dans lequel l'étage de sélection de mode de codage comprend en série :
(a) un étage de transformation orthogonale desdits signaux courants d'entrée ;
(b) un circuit dit de décision inter/intra prévu pour recevoir également lesdits signaux prédits ;
et dans lequel la première voie de reconstruction comprend en série :
(c) un circuit de quantification inverse ;
(d) un circuit de reconstitution de bloc selon ladite définition déterminée ;
(e) un étage de transformation orthogonale inverse ;
(f) une mémoire d'informations selon ladite définition déterminée ;
caractérisé en ce que, dans ledit étage de reconstruction, la deuxième voie de reconstruction comprend :
(a) ledit circuit de quantification inverse ;
(b) un circuit de troncature pour prélever une fraction déterminée des signaux présents en sortie dudit circuit de quantification inverse ;
(c) un circuit de reconstitution de bloc selon ladite définition réduite ;
(d) un étage de transformation orthogonale inverse ;
(e) une mémoire d'informations selon ladite définition réduite ; et en ce que le circuit de reconstitution d'image comprend :
(f) en sortie de ladite première voie, une première branche de reconstitution comprenant elle-même un premier circuit de prédiction avec compensation de mouvement, un premier circuit de transformation orthogonale, et un circuit dit de troncature BF prévu pour éliminer, dans les coefficients résultant de ladite transformation orthogonale, une fraction déterminée représentant les coefficients de plus basse fréquence ;
(g) en sortie de ladite deuxième voie, une deuxième branche de reconstitution comprenant elle-même un deuxième circuit de prédiction avec compensation de mouvement et un deuxième circuit de transformation orthogonale ;
(h) un circuit de combinaison des signaux de sortie desdites première et deuxième branches, prévu pour délivrer lesdits signaux prédits envoyés vers ledit étage de sélection de mode de codage.

Dans une variante perfectionnée de ce deuxième mode de réalisation, le dispositif de codage est caractérisé en ce que le circuit de reconstitution d'image de l'étage de prédiction comprend, entre la sortie de ladite deuxième branche de reconstitution et l'entrée correspondante dudit circuit de combinaison, un circuit de mélange pondéré comprenant lui-même :
(a) un multiplieur de la sortie de la première branche qui correspond auxdits coefficients éliminés par le circuit de troncature BF par un coefficient α compris entre 0 et 1 ;
(b) un multiplieur de la sortie de ladite deuxième branche par le coefficient (1-α);
(c) un additionneur des sorties desdits multiplieurs, le signal de sortie dudit additionneur étant fourni à ladite entrée correspondante du circuit de combinaison.

Un autre but de l'invention est de proposer un dispositif de décodage de signaux numériques correspondant à des images de télévision, grâce auquel il est possible de reconstituer à la fois des images de définition réduite et des images à haute définition de bonne qualité.

L'invention concerne à cet effet un dispositif de décodage tel que défini dans le préambule et caractérisé en ce qu'il comprend lui-même, en association à un étage de décodage :
(A) un étage de reconstruction d'image selon ladite définition réduite, à partir de signaux décodés ;
(B) un étage de compensation de mouvement à partir desdites informations additionnelles ;
(C) un étage de prédiction à partir des signaux de sortie dudit étage de reconstruction d'image.

Dans un mode de réalisation particulier, l'invention concerne un dispositif de décodage, dans lequel l'étage de décodage est une chaîne de décodage à longueur variable de signaux numériques codés préalablement transmis et/ou stockés après traitement dans une chaîne de codage à longueur variable, ladite chaîne de décodage comprenant elle-même un circuit de mémorisation, un circuit de décodage à longueur variable, un circuit de quantification inverse, un circuit de normalisation inverse, un circuit de conversion de balayage inverse et un circuit de transformation orthogonale inverse, caractérisé en ce que :
(A) l'étage de reconstruction d'image selon ladite définition réduite comprend en série :
   (a) un circuit de troncature, pour prélever une fraction déterminée des signaux après décodage ;
   (b) un circuit de transformation orthogonale inverse ;
   (c) un additionneur recevant sur sa première entrée la sortie dudit circuit de transformation orthogonale inverse ;
   (d) une mémoire de stockage de l'image reconstituée à définition réduite présente en sortie dudit additionneur ;
   (e) un premier circuit de compensation de mouvement, recevant d'une part la sortie de ladite mémoire et d'autre part lesdites informations de mouvement, et relié par sa sortie à la deuxième entrée dudit additionneur ;
(B) l'étage de prédiction comprend :
   (f) un premier multiplieur des signaux de sortie dudit dispositif de décodage par un coefficient α compris entre 0 et 1
   (g) un deuxième multiplieur de la sortie dudit étage de reconstruction d'image selon ladite définition réduite par le coefficient (1-α), un circuit de rééchantillonnage et de remise en phase étant inséré entre ladite sortie et l'entrée correspondante dudit deuxième multiplieur ;
   (h) un additionneur des sorties desdits premier et deuxième multiplieurs ;
   (i) une mémoire de mélange pondéré entre images selon ladite définition déterminée et selon ladite définition réduite ;
(C) l'étage de compensation de mouvement comprend :
   (j) un deuxième circuit de compensation de mouvement, recevant d'une part la sortie dudit étage de prédiction et d'autre part lesdites informations additionnelles de mouvement et de mode de codage ;
   (k) un additionneur des sorties de ladite chaîne de décodage et dudit deuxième circuit de compensation de mouvement.

Dans un deuxième mode de réalisation, l'invention concerne un dispositif de décodage dans lequel l'étage de décodage est une chaîne de décodage à longueur variable de signaux numériques codés préalablement transmis et/ou stockés après traitement dans une chaîne de codage à longueur variable, ladite chaîne de décodage comprenant elle-même un circuit de mémorisation, un circuit de décodage à longueur variable, un circuit de quantification inverse, un circuit de normalisation inverse, et un circuit de transformation orthogonale inverse, caractérisé en ce que, une première mémoire de stockage d'informations selon ladite définition déterminée étant prévue en sortie de ladite chaîne de décodage :
(A) l'étage de reconstruction d'image selon ladite définition réduite comprend en série :
   (a) un circuit de troncature pour prélever une fraction déterminée des signaux après décodage ;
   (b) un circuit de reconstitution de bloc selon ladite définition réduite ;
   (c) un circuit de transformation orthogonale inverse ;
   (d) une deuxième mémoire de stockage d'informations selon ladite définition réduite ;
(B) l'étage de compensation de mouvement comprend des premier et deuxième circuits de compensation de mouvement recevant chacun d'une part la sortie d'une desdites deux mémoires de stockage d'informations et d'autre part lesdites informations de mouvement et de mode de codage ;
(C) l'étage de prédiction comprend :
   (f) en sortie de celui desdits circuits de compensation de mouvement qui suit ladite mémoire de stockage d'informations selon la définition déterminée, une première branche de reconstitution comprenant elle-même un premier circuit de transformation orthogonale et un circuit dit de troncature BF prévu pour éliminer, dans les coefficients résultant de ladite transformation orthogonale, une fraction déterminée représentant les coefficients de plus basse fréquence ;
   (g) en sortie de l'autre desdits circuits de compensation de mouvement, qui suit ladite mémoire de stockage d'informations selon la définition réduite, une deuxième branche de reconstitution comprenant elle-même un deuxième circuit de transformation orthogonale ;
   (h) en sortie desdites première et deuxième branches en parallèle, un circuit de combinaison des signaux de sortie desdites première et deuxième branches ;
   (i) un additionneur des signaux de sortie dudit circuit de combinaison et du circuit de quantification inverse de la chaîne de décodage à longueur variable, inséré entre ce circuit de quantification inverse et le circuit de transformation orthogonale inverse qui suit ce dernier.

Dans une variante perfectionnée de ce deuxième mode de réalisation, le dispositif de décodage est caractérisé en ce que l'étage de prédiction comprend également, entre la sortie de ladite deuxième branche de reconstitution et l'entrée correspondante dudit circuit de combinaison, un circuit de mélange pondéré comprenant lui-même :
(a) un multiplieur de la sortie de ladite première branche qui correspond auxdits coefficients éliminés par le circuit de troncature BF par un coefficient α compris entre 0 et 1 ;
(b) un multiplieur de la sortiede ladite deuxième branche par le coefficient (1-α) ;
(c) un additionneur des sorties desdits multiplieurs, le signal de sortie dudit additionneur étant fourni à ladite entrée correspondante du circuit de combinaison.

Les particularités et avantages de l'invention apparaîtront maintenant de façon plus précise dans la description qui suit et sur les figures annexées, données à titre d'exemples non limitatifs et dans lesquelles :
- la figure 1 montre un premier exemple de réalisation d'un dispositif de codage selon l'invention ;
- les figures 2A et 2B montrent un balayage de coefficients de type traditionnel et un balayage dit en zig-zag modifié ;
- la figure 3 montre un deuxième exemple de réalisation d'un dispositif de codage selon l'invention ;
- les figures 4 et 5 montrent deux exemples de réalisation d'un dispositif de décodage selon l'invention.

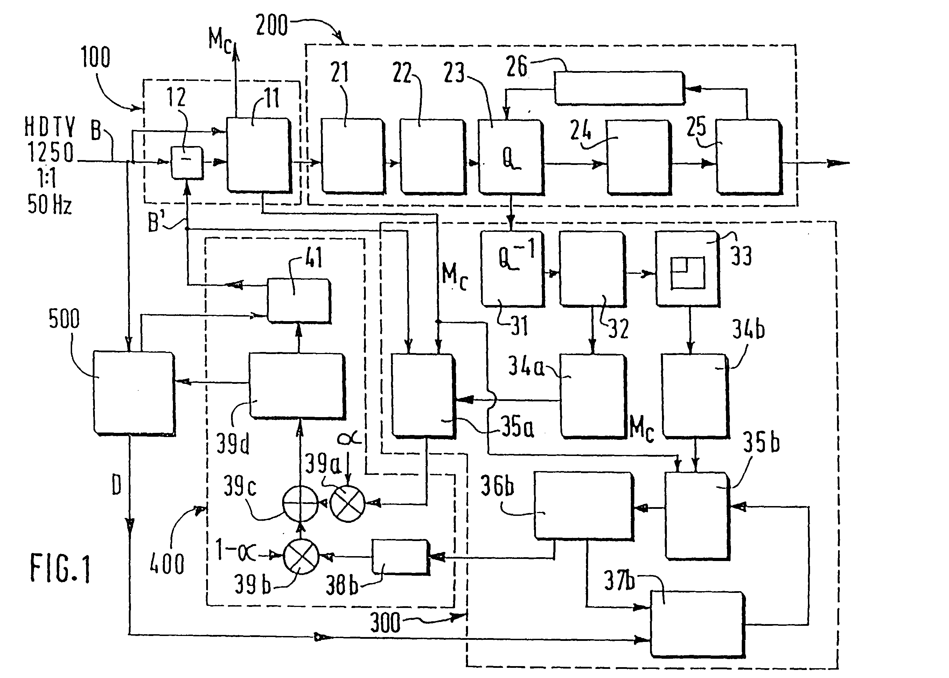

Le dispositif de codage représenté sur la figure 1 dans un premier mode de réalisation comprend tout d'abord un étage de sélection du mode de codage des signaux à coder, qui sont des signaux numériques considérés par blocs de taille fixe opérant une subdivision des images reçues (à savoir des images HDTV, 1250 lignes, 1:1, 50 Hz) et traités indépendamment. Cet étage est ici un circuit 100 dit de décision inter/intra. Ce circuit 100 comprend d'une part un circuit de calcul d'énergies 11, qui effectue tout d'abord, sur les signaux courants d'entrée du dispositif, le calcul de l'énergie contenue par bloc d'image dans les composantes autres que la composante continue, la référence B désignant le bloc courant. Le circuit 100 comprend également un soustracteur 12 qui reçoit d'une part les échantillons correspondant au bloc B courant et d'autre part les échantillons correspondant à un bloc B' prédit délivré par un étage de prédiction 400 décrit plus loin. La soustraction (B-B') étant opérée, le circuit 11 de calcul d'énergies détermine cette fois l'énergie contenue dans ce bloc d'échantillons constitué en sortie du soustracteur 12 (toujours hors composante continue), puis, selon le résultat d'une comparaison des deux énergies ainsi calculées, sélectionne l'un ou l'autre de deux modes de codage dits codage inter-image (B-B' est codé) et codage intra-image (B est codé) et appelés par abréviation codages inter et intra respectivement. Une information additionnelle M_{c} précisant ce mode de codage est alors émise par le circuit 100, car elle sera nécessaire, notamment à la réception, pour permettre la reconstruction des images.

L'étage de sélection de mode de codage est suivi de l'étage de codage, ici un étage 200 de codage à longueur variable constituant la chaîne de codage proprement dite (mais un autre type d'étage de codage, par exemple un étage de codage à longueur fixe, pourrait être utilisé). Cette chaîne de codage comprend un circuit de transformation orthogonale 21 (ici et comme dans la suite de la description sans que le type de transformation orthogonale et le nombre de coefficients retenus dans le cas présent soient en aucune manière une limitation de l'invention, un circuit de transformation cosinus discrète, sur des blocs comprenant par exemple8 x 8 coefficients, ladite transformation étant donc notée DCT 8 x 8), un circuit 22 de conversion de balayage, un circuit 23 de quantification, un circuit 24 de codage à longueur variable, un circuit 25 de mémorisation, et un circuit 26 de régulation de débit délivrant un signal de normalisation renvoyé vers le circuit 23.

Le balayage -c'est-à-dire l'ordre de lecture- des coefficients délivrés par le circuit 21 de transformation orthogonale est ici un balayage dit en zig-zag modifié. La figure 2A montre, dans le cas où, sans que cet exemple soit limitatif, la taille des blocs est 8 x 8 pour les images à haute définition et 4 x 4 pour les images à définition réduite, l'ordre de lecture des coefficients dans le cas d'un balayage en zig-zag traditionnel, et la figure 2B l'ordre de lecture adopté dans le cas présent du balayage en zig-zag modifié.

Les signaux présents en sortie du circuit de quantification 23 sont fournis à un étage 300 de reconstruction d'image constitué de la façon suivante. Cet étage 300 comprend un circuit 31 de quantification inverse, puis, en sortie de celui-ci, une première voie de reconstruction d'une image selon ladite définition déterminée, ladite première voie comprenant elle-même un circuit 32 de conversion de balayage inverse, un circuit 34a de transformation orthogonale inverse (transformation cosinus discrète inverse, effectuée sur des blocs de 8 x 8 coefficients, et donc notée DCT 8 x 8 inverse), et un circuit 35a de reconstruction du signal à haute définition tel qu'il serait décodé, aux erreurs de transmission près (ce circuit 35a recevant, pour permettre ladite reconstruction, les signaux B' et M_{c}).

L'étage 300 comprend également, en sortie du circuit 32 de conversion de balayage inverse, une deuxième voie de reconstruction d'une image à définition réduite (ici l'image TV compatible lorsque l'image de définition déterminée est une image de télévision à haute définition), ladite deuxième voie comprenant elle-même un circuit de troncature 33 permettant de sélectionner une fraction déterminée des coefficients du bloc, ici les seize premiers (soit un quart) dans l'ordre du balayage en zig-zag modifié, un circuit 34b de transformation orthogonale inverse (transformation cosinus discrète inverse, notée DCT 4 x 4 inverse puisque le nouveau bloc ainsi constitué ne contient plus que 4 x 4 coefficients), un circuit 35b de reconstitution de signal de télévision compatible tel qu'il serait décodé aux erreurs de transmission près, une mémoire 36b de stockage du signal ainsi reconstitué, et un circuit 37b de compensation de mouvement. Les signaux de sortie des circuits 35a et 36b constituent les signaux de sortie de l'étage 300.

Ces signaux de sortie sont fournis à l'étage de prédiction 400 mentionné précédemment. Cet étage 400 est un circuit de reconstitution d'image, par combinaison des signaux de sortie desdites première et deuxième voies de reconstruction, et comprend lui-même un multiplieur 39a et un multiplieur 39b des sorties desdites première et deuxième voies par un coefficient α et par un coefficient (1-α) respectivement (α étant compris entre 0 et 1), ainsi qu'un additionneur 39c des sorties desdits multiplieurs et une mémoire de pondération 39d stockant la sortie dudit additionneur. Un circuit 38b de rééchantillonnage et de remise en phase est prévu en amont du multiplieur 39b pour réaligner le nombre de points d'image constituant les images qui se présentent à l'entrée des multiplieurs, ainsi que pour la remise en phase de ces images (en raison du déphasage dû à la transformation orthogonale DCT 4 x 4 inverse). La sortie de la mémoire 39d est fournie à un circuit de prédiction 41. Ce circuit 41, destiné à délivrer les blocs B' prédits, est ici prévu pour recevoir d'une part la sortie de la mémoire 39d et d'autre part les informations de mouvement délivrées par un étage 500 d'estimation de mouvement.

Cet étage 500 comprend, de façon classique, un corrélateur par blocs entre l'image courante présente à l'entrée du dispositif et l'image reconstituée présente en sortie de la mémoire 39d, la sortie de cette mémoire 39d étant en effet fournie également audit étage 500. Lesdites informations de mouvement sont ici des vecteurs de mouvement indiquant le déplacement entre un bloc d'une image et le bloc correspondant de l'image suivante considérée. Le circuit de prédiction 41 consiste alors, ici, en un circuit d'adressage de la mémoire 39d, cet adressage étant effectué en fonction desdits vecteurs de mouvement.

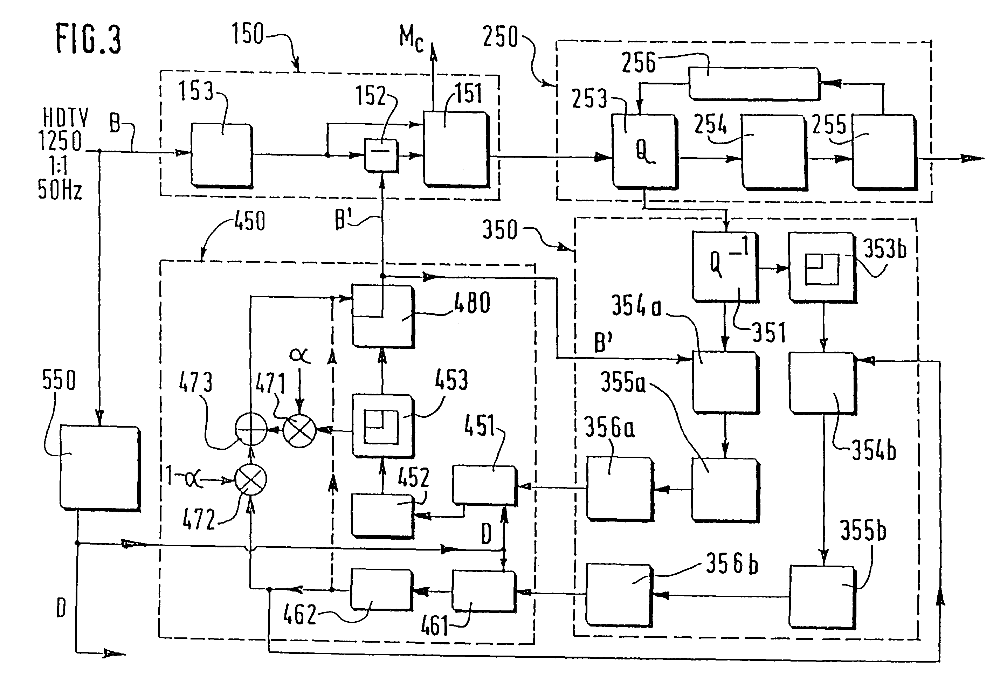

Le dispositif de codage représenté sur la figure 3 dans un deuxième mode de réalisation opère non plus sur les signaux correspondant aux points d'image, mais à partir des coefficients résultant d'une transformation orthogonale (par exemple une transformation cosinus discrète) desdits signaux correspondant aux points d'image. Ce dispositif de la figure 3 comprend tout d'abord, comme précédemment, un étage de sélection du mode de codage des signaux à coder, référencé 150 et qui comprend cette fois non seulement un circuit de décision inter/intra composé d'un circuit de calcul d'énergies 151 et d'un soustracteur 152 similaires quant à leur structure et à leur fonctionnement au circuit 11 et au soustracteur 12 respectivement, mais aussi, en amont de ces deux éléments, un étage 153 de transformation orthogonale (transformation cosinus discrète) des signaux courants d'entrée du dispositif de codage.

L'étage de sélection de mode de codage est suivi, comme dans le cas de la figure 1, d'un étage de codage, référencé 250 et qui est ici une chaîne de codage à longueur variable. Celle-ci comprend un circuit 253 de quantification, un circuit 254 de codage à longueur variable, un circuit 255 de mémorisation, et un circuit 256 de régulation de débit délivrant un signal de normalisation renvoyé vers le circuit 253. Les signaux présents en sortie dudit circuit de quantification 253 sont fournis à un étage de reconstruction constitué cette fois de la façon suivante.

Cet étage de reconstruction, référencé 350, comprend une première voie de reconstruction d'une image selon ladite définition déterminée, ladite première voie comprenant elle-même un circuit 351 de quantification inverse, un circuit 354a de reconstitution de bloc selon ladite définition déterminée, un étage 355a de transformation orthogonale inverse (transformation DCT inverse), et une mémoire d'informations selon ladite définition déterminée 356a. L'étage 350 comprend également, en sortie du circuit de quantification 253, une deuxième voie de reconstruction d'image selon ladite définition réduite, ladite deuxième voie comprenant elle-même le circuit 351 de quantification inverse, un circuit de troncature 353b pour le prélèvement d'une fraction déterminée des signaux présents en sortie dudit circuit 351, un circuit 354b de reconstitution de bloc selon ladite définition réduite, un étage 355b de transformation orthogonale inverse (transformation DCT inverse), et une mémoire d'informations selon ladite définition réduite 356b. Les sorties des mémoires 356a et 356b vont alors être utilisées pour une reconstitution d'image précédant la sélection des signaux à coder et le codage, et sont à cet effet fournies à l'étage de prédiction 450.

Cet étage 450 comprend d'une part, en sortie de la première voie de reconstruction, une première branche de reconstitution comprenant elle-même un premier circuit 451 de prédiction avec compensation de mouvement, un premier circuit 452 de transformation orthogonale (transformation DCT), et un circuit 453 dit de troncature BF permettant d'éliminer, dans les coefficients résultant de ladite transformation orthogonale, une fraction déterminée représentant les coefficients correspondant aux plus basses fréquences. Cette fraction est, dans tous les exemples ici décrits, égale à un quart, mais cette valeur ne constitue qu'un exemple non limitatif. L'étage 450 comprend d'autre part, en sortie de la deuxième voie de reconstruction, une deuxième branche de reconstitution comprenant elle-même un deuxième circuit 461 de prédiction avec compensation de mouvement et un deuxième circuit 462 de transformation orthogonale (transformation DCT). Cet étage 450 comprend enfin, en sortie desdites première et deuxième branches en parallèle, un circuit 480 de combinaison des signaux de sortie dudit circuit 453 de troncature BF et du deuxième circuit 462 de transformation orthogonale (transformation DCT). Ce circuit 480 délivre les signaux prédits envoyés vers l'étage de sélection de mode de codage.

Les informations de mouvement sont, comme précédemment, fournies par un étage d'estimation de mouvement 550, tout à fait identique à l'étage 500 de la figure 1, et qui adresse aux circuits 451 et 461 des vecteurs de mouvement D autorisant la compensation de mouvement par bloc lors des étapes de construction des blocs prédits B'. Là aussi, les vecteurs D sont, comme les informations M_{c}, transmis et/ou stockés, car nécessaires à la réception.

Réciproquement, lorsque des signaux numériques ont été codés dans un dispositif de codage conforme à l'invention, leur décodage est également prévu dans le cadre de cette invention. Le dispositif qui autorise ce décodage comprend, en association à un étage de décodage, d'une part un étage de reconstruction d'image selon ladite définition réduite, prévu pour opérer à partir des signaux décodés, disponibles dans ladite définition déterminée, et desdites informations de mouvement et de mode de codage transmises, d'autre part un étage de prédiction à partir desdits signaux décodés et des signaux de sortie dudit étage de reconstruction d'image, et enfin, en aval dudit étage de reconstruction d'image, un étage de compensation de mouvement.

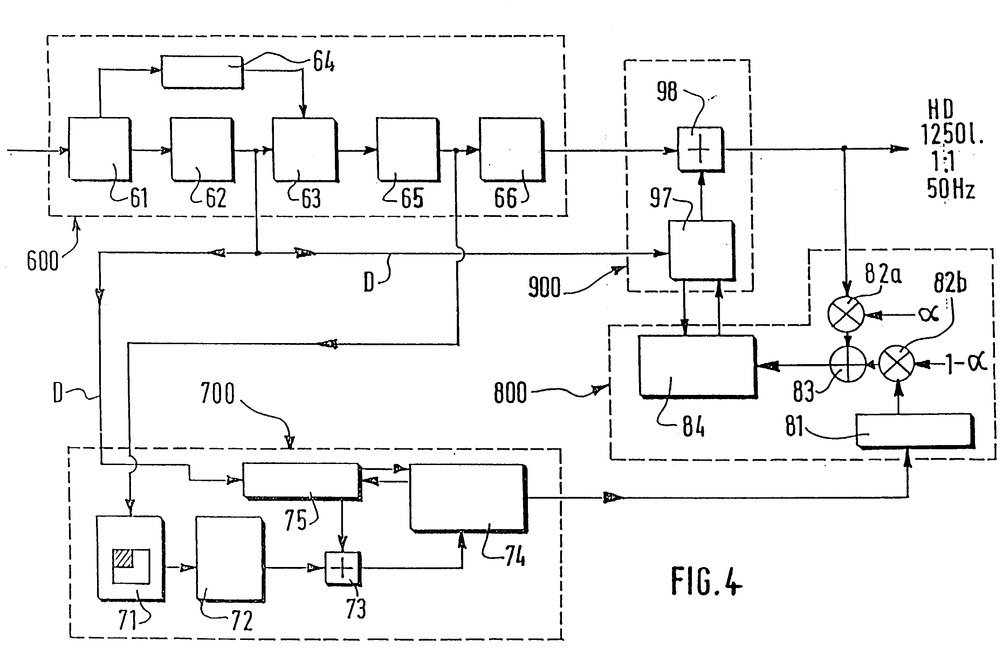

Plus précisément, dans l'exemple de réalisation représenté sur la figure 4, le dispositif de décodage comprend tout d'abord un étage 600 de décodage à longueur variable, constituant la chaîne de décodage proprement dite. Cet étage 600 comprend lui-même d'abord une mémoire-tampon 61 recevant les signaux d'entrée du dispositif de décodage, c'est-à-dire l'ensemble des signaux préalablement codés et transmis (ou stockés). Ces signaux incluent d'une part des signaux numériques codés obtenus à partir d'images de télévision initiales à haute définition, et d'autre part les informations de mouvement fournies par l'étage d'estimation de mouvement du dispositif de codage et les informations de mode de codage fournies par l'étage de sélection de mode de codage de ce même dispositif de codage. La mémoire-tampon 61 est suivie d'un circuit 62 de décodage à longueur variable, d'un circuit 63 de quantification inverse (relié par l'intermédiaire d'un circuit 64 de normalisation inverse à la mémoire-tampon 61), d'un circuit 65 de conversion de balayage inverse, et d'un circuit 66 de transformation orthogonale inverse (ici un circuit de transformation cosinus discrète inverse opérant sur des blocs de 8 x 8 coefficients, cette transformation étant alors notée DCT 8 x 8 inverse). Le circuit 65 réalise une opération de balayage en zig-zag modifié inverse (transformation inverse de celui de la figure 2B). L'étage 600 de décodage à longueur variable ainsi décrit constitue, de fait, une première voie de reconstruction d'une image à haute définition.

Le dispositif de décodage comprend également un étage 700 de reconstruction d'image à définition réduite, ici d'une image TV compatible. Cet étage constitue dans ledit dispositif une deuxième voie de reconstruction d'image à définition réduite, comprenant elle-même d'abord un circuit de troncature 71 qui, comme le circuit 33, permet de sélectionner une fraction déterminée des signaux décodés, à savoir ici une fraction déterminée des coefficients correspondant à un bloc (dans le cas présent les seize premiers dans l'ordre du balayage en zig-zag modifié) et qui, à cet effet, est prévu en sortie du circuit 65 de conversion de balayage inverse. Ce circuit 71 est suivi d'un circuit 72 de transformation orthogonale inverse (ici une transformation cosinus discrète inverse, notée DCT 4 x 4 inverse), puis d'une mémoire 74 de stockage de l'image à définition réduite reconstituée.

Cette reconstitution tient compte d'une part de l'estimation de mouvement effectuée lors du codage, et d'autre part du mode de codage sélectionné. Comme on l'a vu ci-dessus, les signaux transmis incluent des informations de mouvement résultant de cette estimation et des informations de mode de codage indiquant la sélection effectuée. Ces informations sont fournies d'une part à l'étage 700, et d'autre part à un étage de compensation de mouvement 900. Cet étage 900 comprend ici un circuit 97 de compensation de mouvement et un additionneur 98. Le circuit 97 est, en fait, un circuit d'adressage d'une mémoire 84 (décrite plus loin), cet adressage tenant compte des déplacements de bloc indiqués par lesdites informations de mouvement. Dans l'étage 700, les informations de mouvement et de mode de codage sont reçues, après leur décodage, par un circuit 75 de compensation de mouvement, qui est là aussi un circuit d'adressage de la mémoire 74 compte tenu des déplacements de bloc indiqués par les informations de mouvement.

Les images ainsi reconstruites avec compensation de mouvement sont alors envoyées respectivement vers l'additionneur 98 (pour les images à haute définition) et vers un additionneur 73 (pour les images à définition réduite). L'additionneur 98, qui reçoit donc la sortie du circuit 97 sur sa première entrée, reçoit sur sa deuxième entrée la sortie du circuit 66 de transformation orthogonale inverse de l'étage 600 et délivre les images HDTV à haute définition reconstituées (1250 lignes, 2:1, 50 hertz) qui correspondent aux images à haute définition d'origine. L'additionneur 73, qui reçoit sur sa première entrée la sortie du circuit 75 de compensation de mouvement, est inséré, lui, entre le circuit 72 de transformation orthogonale inverse, dont il reçoit la sortie sur sa deuxième entrée, et la mémoire 74, vers laquelle est envoyée sa sortie.

Le dispositif de décodage comprend enfin un étage 800 de prédiction, comprenant lui-même un premier et un deuxième multiplieur 82a et 82b pour la multiplication des sorties de l'additionneur 98 et du circuit 81 respectivement par un coefficient α compris entre 0 et 1 et par le coefficient complémentaire (1-α), un additionneur 83 des sorties de ces multiplieurs, et une mémoire stockant la sortie de cet additionneur 83. Cette mémoire est la mémoire 84 citée précédemment et contient, du fait de l'action des multiplieurs, un mélange pondéré des images reconstituées à haute définition et à définition réduite, respectivement présentes, après exécution de la compensation de mouvement, en sortie des étages 600 et 700. Un circuit 81 de rééchantillonnage et de remise en phase est ici prévu en sortie de la mémoire 74, entre celle-ci et le deuxième multiplieur 82b.

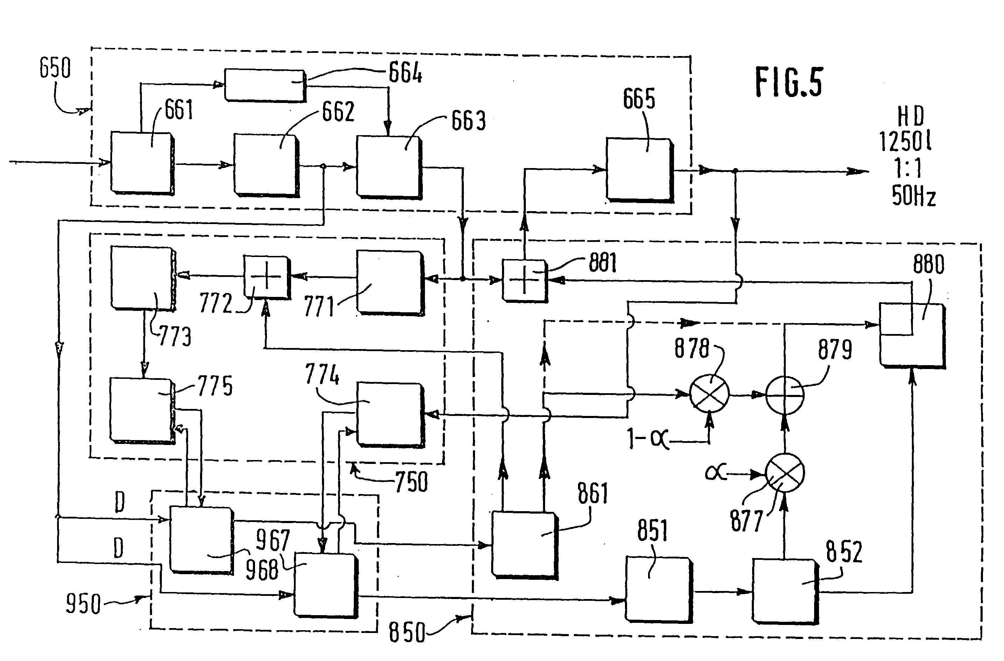

Le dispositif de décodage représenté sur la figure 5 dans un deuxième mode de réalisation comprend tout d'abord, comme précédemment, un étage 650 de décodage à longueur variable, constituant la chaîne de décodage proprement dite. Cet étage 650 comprend lui-même une mémoire-tampon 661 recevant les signaux d'entrée du dispositif de décodage (les signaux numériques précédemment codés et les informations de mouvement et de mode de codage), suivie d'un circuit 662 de décodage à longueur variable, d'un circuit 663 de quantification inverse (relié par l'intermédiaire d'un circuit 664 de normalisation inverse à la mémoire-tampon 661), et d'un circuit 665 de transformation orthogonale inverse (DCT inverse). L'étage 650 ainsi décrit constitue, dans le dispositif de la figure 5, une première voie de reconstruction d'une image à haute définition, dont la sortie est mémorisée dans une première mémoire 774 mentionnée plus loin.

Le dispositif de décodage comprend également un étage 750 de reconstruction d'image à définition réduite, ici d'une image TV compatible. Cet étage 750 constitue une deuxième voie de reconstruction d'une image à définition réduite, comprenant elle-même en série d'abord un circuit de troncature 771 pour sélectionner une fraction déterminée (ici un quart) des signaux décodés, ce circuit 771 étant prévu en sortie du circuit 663 de quantification inverse. Ce circuit 771 est suivi d'un additionneur 772 pour la reconstitution de bloc selon la définition réduite, puis d'un circuit 773 de transformation orthogonale inverse et d'une deuxième mémoire 775 de stockage d'informations selon la définition réduite. L'étage 750 est complété par la première mémoire 774 de stockage d'informations à haute définition, recevant les signaux décodés présents en sortie de l'étage de décodage 650, c'est-à-dire de la première voie de reconstruction.

Comme précédemment, les informations additionnelles transmises et/ou stockées (informations de mouvement et de mode de codage) sont fournies à l'étage 750, ainsi qu'à un étage de compensation de mouvement 950. Cet étage 950 consiste ici en deux circuits 967 et 968 de compensation de mouvement recevant d'une part la sortie des deux mémoires 774 et 775 dudit étage de reconstruction d'image et d'autre part lesdites informations de mouvement (après leur décodage) et est en fait un circuit d'adressage des mémoires 774 et 775 respectivement, compte tenu des déplacements de bloc indiqués par lesdites informations de mouvement.

Les blocs ainsi reconstruits avec compensation de mouvement sont alors fournis à un étage de prédiction 850 comprenant une première et une deuxième branche de reconstitution, respectivement à haute définition et à définition réduite, et, à leur sortie, un circuit de combinaison des signaux qu'elles délivrent. La première branche de reconstitution (à haute définition) comprend un premier circuit 851 de transformation orthogonale, ainsi qu'un circuit 852 dit de troncature BF, prévu pour éliminer, dans les coefficients résultant de ladite transformation orthogonale, une fraction déterminée représentant les coefficients de plus basse fréquence, tandis que la deuxième branche de reconstitution (à définition réduite) consiste en un deuxième circuit de transformation orthogonale 861. En sortie de ces première et deuxième branches en parallèle, un circuit 880 prélève les signaux fournis respectivement par le circuit 852 de troncature BF et le deuxième circuit de transformation orthogonale 861 et les combine pour constituer des signaux dits prédits. Ces signaux de sortie du circuit de combinaison 880 sont alors envoyés vers la deuxième entrée d'un additionneur 881 dont la première reçoit les signaux de sortie du cicuit 663 de quantification inverse. Cet additionneur 881 est inséré entre ledit circuit 663 et le circuit 665 de la chaîne de décodage 650.

Bien entendu, la présente invention n'est pas limitée aux exemples de réalisation ci-dessus décrits et représentés, à partir desquels des variantes peuvent être proposées sans pour cela du cadre de l'invention. Il est possible, en particulier, dans le deuxième mode de réalisation de dispositif de codage de la figure 3 qui vient d'être décrit, de prévoir dans le circuit de reconstitution d'image une pondération analogue à celle qui est prévue dans le premier mode de réalisation de la figure 1, en sortie des deux voies de reconstruction. Ledit circuit de reconstitution d'image comprend à cet effet, comme indiqué en trait continu sur la figure 3 (alors que, en l'absence de cette variante, la liaison directe entre la sortie de la deuxième branche et l'entrée correspondante du circuit de combinaison 480 est, sur cette même figure 3, représentée en trait discontinu), des circuits similaires à ce qui a été déjà décrit, à savoir un multiplieur 471 de la sortie du circuit de troncature BF 453 qui, dans le cas du premier mode de réalisation avec liaison directe, correspond auxdits coefficients éliminés par un coefficient α compris entre 0 et 1, un multiplieur 472 de la sortie de l'autre branche par le coefficient (1 - α), et un additionneur 473 des sorties desdits multiplieurs. La sortie de l'additionneur 473 est reliée à celle des entrées du circuit de combinaison 480 qui, dans le cas de la liaison directe représentée en trait discontinu, recevait la sortie de la deuxième branche.

Il est également possible, dans le deuxième mode de réalisation de dispositif de décodage de la figure 5, de prévoir dans l'étage de prédiction une pondération analogue à celle qui est prévue dans le premier mode de réalisation de la figure 4, dans l'étage de prédiction également. Cette pondération est réalisée comme précédemment à l'aide de deux multiplieurs et d'un additionneur : comme indiqué en trait continu sur la figure 5 (alors que, en l'absence de cette variante, la liaison directe entre la sortie de la deuxième branche et l'entrée correspondante du circuit de combinaison 880 est, sur cette même figure, représentée en trait discontinu), un multiplieur 877 reçoit la sortie de la première branche et la multiplie par un coefficient α compris entre 0 et 1, un multiplieur 878 reçoit la sortie de l'autre branche et la multiplie par le coefficient (1-α), et l'additionneur 879 reçoit les sorties de ces deux multiplieurs et envoie sa sortie vers celle des entrées du circuit de combinaison 880 qui, dans le cas de la liaison directe, recevait la sortie de la deuxième branche.

Par ailleurs, la mémoire 774 de stockage d'informations à haute définition a été ici considérée comme incorporée à l'étage 750, mais pourrait, alternativement, être considérée comme faisant partie plutôt de l'étage 650. Cette variante est aisée à comprendre et n'a pas été représentée sur la figure 5.

## Revendications

1. Dispositif de codage de signaux numériques correspondant à des images de télévision de définition déterminée, comprenant :
(A) un étage de sélection du mode de codage des signaux à coder à partir d'une part des signaux courants d'entrée du dispositif de codage et d'autre part de signaux prédits sur la base de précédents signaux d'entrée du dispositif, ledit étage délivrant lesdits signaux à coder et des informations de mode de codage ;
(B) un étage de codage ;
(C) un étage de reconstruction d'image, dans une première voie de reconstruction d'image selon ladite définition déterminée ;
(D) un étage d'estimation de mouvement entre images, délivrant des informations de mouvement ;
(E) un étage de prédiction à partir des signaux de sortie desdits étages de reconstruction d'image et d'estimation de mouvement, les signaux de sortie dudit étage de prédiction constituant lesdits signaux prédits envoyés vers ledit étage de sélection de mode de codage ;
caractérisé en ce que lesdits signaux numériques sont considérés par blocs de taille déterminée opérant une subdivision des images et traités indépendamment, en ce que l'étage de reconstruction d'image comprend également une deuxième voie de reconstruction d'image selon une définition dite réduite, située en parallèle sur ladite première voie, et en ce que l'étage de prédiction comprend un circuit de reconstitution d'image par combinaison des signaux de sortie desdites première et deuxième voies de reconstruction.

2. Dispositif de codage selon la revendication 1, dans lequel l'étage de codage est une chaîne de codage à longueur variable comprenant un circuit de transformation orthogonale, un circuit de conversion de balayage, un circuit de quantification, un circuit de codage à longueur variable, un circuit de mémorisation et un circuit de régulation de débit et dans lequel la première voie de l'étage de reconstruction comprend en série :
(a) un circuit de quantification inverse ;
(b) un circuit de conversion de balayage inverse ;
(c) un étage de transformation orthogonale inverse ;
(d) un circuit de reconstruction du signal selon ladite définition déterminée, tel qu'il serait décodé après transmission, aux erreurs de transmission près ;
caractérisé en ce que, dans ledit étage de reconstruction d'image, la deuxième voie de reconstruction comprend :
(a) ledit circuit de quantification inverse ;
(b) ledit circuit de conversion de balayage inverse ;
(c) un circuit de troncature pour prélever une fraction déterminée des signaux présents en sortie dudit circuit de quantification inverse ;
(d) un circuit de transformation orthogonale inverse ;
(e) un circuit de reconstruction du signal à définition réduite tel qu'il serait décodé après transmission, aux erreurs de transmission près ;
(f) une mémoire de stockage dudit signal reconstruit ;
(g) entre la sortie de ladite mémoire et ledit circuit de reconstruction du signal à définition réduite, un circuit de compensation de mouvement ;
et en ce que ledit circuit de reconstitution d'image comprend :
(h) un multiplieur de la sortie de la première voie de reconstruction par un coefficient α compris entre 0 et 1 ;
(i) un multiplieur de la sortie de la deuxième voie de reconstruction par le coefficient (1-α),
un circuit de rééchantillonnage et de remise en phase étant inséré entre ladite sortie de la deuxième voie de reconstruction et l'entrée correspondante du multiplieur associé ;
(j) un additionneur des sorties desdits multiplieurs ;
(k) une mémoire dite de pondération, pour le stockage de la sortie dudit additionneur ;
(ℓ) un circuit de prédiction prévu pour recevoir d'une part la sortie de ladite mémoire de pondération et d'autre part les informations de mouvement délivrées par ledit étage d'estimation de mouvement.

3. Dispositif de codage selon la revendication 1, dans lequel l'étage de codage est une chaîne de codage à longueur variable comprenant un circuit de quantification, un circuit de codage à longueur variable, un circuit de mémorisation et un circuit de régulation de débit, dans lequel l'étage de sélection de mode de codage comprend en série :
(a) un étage de transformation orthogonale desdits signaux courants d'entrée ;
(b) un circuit dit de décision inter/intra prévu pour recevoir également lesdits signaux prédits ;
et dans lequel la première voie de reconstruction comprend en série :
(c) un circuit de quantification inverse ;
(d) un circuit de reconstitution de bloc selon ladite définition déterminée ;
(e) un étage de transformation orthogonale inverse ;
(f) une mémoire d'informations selon ladite définition déterminée ;
caractérisé en ce que, dans ledit étage de reconstruction, la deuxième voie de reconstruction comprend :
(a) ledit circuit de quantification inverse ;
(b) un circuit de troncature pour prélever une fraction déterminée des signaux présents en sortie dudit circuit de quantification inverse ;
(c) un circuit de reconstitution de bloc selon ladite définition réduite ;
(d) un étage de transformation orthogonale inverse ;
(e) une mémoire d'informations selon ladite définition réduite ;
et en ce que le circuit de reconstitution d'image comprend :
(f) en sortie de ladite première voie, une première branche de reconstitution comprenant elle-même un premier circuit de prédiction avec compensation de mouvement, un premier circuit de transformation orthogonale, et un circuit dit de troncature BF prévu pour éliminer, dans les coefficients résultant de ladite transformation orthogonale, une fraction déterminée représentant les coefficients de plus basse fréquence ;
(g) en sortie de ladite deuxième voie, une deuxième branche de reconstitution comprenant elle-même un deuxième circuit de prédiction avec compensation de mouvement et un deuxième circuit de transformation orthogonale ;
(h) un circuit de combinaison des signaux de sortie desdites première et deuxième branches, prévu pour délivrer lesdits signaux prédits envoyés vers ledit étage de sélection de mode de codage.

4. Dispositif de codage selon la revendication 3, caractérisé en ce que le circuit de reconstitution d'image de l'étage de prédiction comprend, entre la sortie de ladite deuxième branche de reconstitution et l'entrée correspondante dudit circuit de combinaison, un circuit de mélange pondéré comprenant lui-même :
(a) un multiplieur de la sortie de ladite première branche qui correspond auxdits coefficients éliminés par le circuit de troncature BF par un coefficient α compris entre 0 et 1 ;
(b) un multiplieur de la sortie de ladite deuxième branche par le coefficient (1-α);
(c) un additionneur des sorties desdits multiplieurs, le signal de sortie dudit additionneur étant fourni à ladite entrée correspondante du circuit de combinaison.

5. Dispositif de codage selon l'une des revendications 2 à 4, caractérisé en ce que ladite fraction déterminée est égale à un quart.

6. Dispositif de décodage de signaux numériques codés préalablement transmis et/ou stockés après traitement dans un dispositif de codage de signaux numériques correspondant à des images de télévision de définition déterminée, ledit dispositif de codage comprenant :
(a) un étage de sélection du mode de codage des signaux à coder à partir d'une part des signaux courants d'entrée dudit dispositif de codage et d'autre part de signaux prédits sur la base de précédents signaux d'entrée de ce dispositif, ces signaux d'entrée courants ou précédents étant considérés par blocs de taille déterminée opérant une subdivision des images et traités indépendamment ;
(b) un étage de codage ;
(c) un étage de reconstruction d'image d'une part selon ladite définition déterminée et d'autre part selon une définition dite réduite ;
(d) un étage d'estimation de mouvement entre images ;
(e) pour fournir lesdits signaux prédits, un étage de prédiction à partir des signaux de sortie desdits étages de reconstruction d'image et d'estimation de mouvement, des informations dites additionnelles et relatives au mouvement estimé entre images et au mode de codage sélectionné étant, comme les signaux codés, destinées à être transmises et/ou stockées;
caractérisé en ce que ledit dispositif de décodage comprend lui-même, en association à un étage de décodage :
(A) un étage de reconstruction d'image selon ladite définition réduite, à partir de signaux décodés ;
(B) un étage de compensation de mouvement à partir desdites informations additionnelles ;
(C) un étage de prédiction à partir des signaux de sortie dudit étage de reconstruction d'image.

7. Dispositif de décodage selon la revendication 6, dans lequel l'étage de décodage est une chaîne de décodage à longueur variable de signaux numériques codés préalablement transmis et/ou stockés après traitement dans une chaîne de codage à longueur variable, ladite chaîne de décodage comprenant elle-même un circuit de mémorisation, un circuit de décodage à longueur variable, un circuit de quantification inverse, un circuit de normalisation inverse, un circuit de conversion de balayage inverse et un circuit de transformation orthogonale inverse, caractérisé en ce que :
(A) l'étage de reconstruction d'image selon ladite définition réduite comprend en série :
(a) un circuit de troncature, pour prélever une fraction déterminée des signaux après décodage ;
(b) un circuit de transformation orthogonale inverse ;
(c) un additionneur recevant sur sa première entrée la sortie dudit circuit de transformation orthogonale inverse ;
(d) une mémoire de stockage de l'image reconstituée à définition réduite présente en sortie dudit additionneur ;
(e) un premier circuit de compensation de mouvement, recevant d'une part la sortie de ladite mémoire et d'autre part lesdites informations de mouvement, et relié par sa sortie à la deuxième entrée dudit additionneur ;
(B) l'étage de prédiction comprend :
(f) un premier multiplieur des signaux de sortie dudit dispositif de décodage par un coefficient α compris entre 0 et 1 ;
(g) un deuxième multiplieur de la sortie dudit étage de reconstruction d'image selon ladite définition réduite par le coefficient (1-α), un circuit de rééchantillonnage et de remise en phase étant inséré entre ladite sortie et l'entrée correspondante dudit deuxième multiplieur ;
(h) un additionneur des sorties desdits premier et deuxième multiplieurs ;
(i) une mémoire de mélange pondéré entre images selon ladite définition déterminée et selon ladite définition réduite ;
(C) l'étage de compensation de mouvement comprend :
(j) un deuxième circuit de compensation de mouvement, recevant d'une part la sortie dudit étage de prédiction et d'autre part lesdites informations additionnelles de mouvement et de mode de codage ;
(k) un additionneur des sorties de ladite chaîne de décodage et dudit deuxième circuit de compensation de mouvement.

8. Dispositif de décodage selon la revendication 6, dans lequel l'étage de décodage est une chaîne de décodage à longueur variable de signaux numériques codés préalablement transmis et/ou stockés après traitement dans une chaîne de codage à longueur variable, ladite chaîne de décodage comprenant elle-même un circuit de mémorisation, un circuit de décodage à longueur variable, un circuit de quantification inverse, un circuit de normalisation inverse, et un circuit de transformation orthogonale inverse, caractérisé en ce que, une première mémoire de stockage d'informations selon ladite définition déterminée étant prévue en sortie de ladite chaîne de décodage :
(A) l'étage de reconstruction d'image selon ladite définition réduite comprend en série :
(a) un circuit de troncature pour prélever une fraction déterminée des signaux après décodage ;
(b) un circuit de reconstitution de bloc selon ladite définition réduite ;
(c) un circuit de transformation orthogonale inverse ;
(d) une deuxième mémoire de stockage d'informations selon ladite définition réduite ;
(B) l'étage de compensation de mouvement comprend des premier et deuxième circuits de compensation de mouvement recevant chacun d'une part la sortie d'une desdites deux mémoires de stockage d'informations et d'autre part lesdites informations de mouvement et de mode de codage ;
(C) l'étage de prédiction comprend :
(f) en sortie de celui desdits circuits de compensation de mouvement qui suit ladite mémoire de stockage d'informations selon la définition déterminée, une première branche de reconstitution comprenant elle-même un premier circuit de transformation orthogonale et un circuit dit de troncature BF prévu pour éliminer, dans les coefficients résultant de ladite transformation orthogonale, une fraction déterminée représentant les coefficients de plus basse fréquence ;
(g) en sortie de l'autre desdits circuits de compensation de mouvement, qui suit ladite mémoire de stockage d'informations selon la définition réduite, une deuxième branche de reconstitution comprenant elle-même un deuxième circuit de transformation orthogonale ;
(h) en sortie desdites première et deuxième branches en parallèle, un circuit de combinaison des signaux de sortie desdites première et deuxième branches ;
(i) un additionneur des signaux de sortie dudit circuit de combinaison et du circuit de quantification inverse de la chaîne de décodage à longueur variable, inséré entre ce circuit de quantification inverse et le circuit de transformation orthogonale inverse qui suit ce dernier.

9. Dispositif de décodage selon la revendication 8, caractérisé en ce que l'étage de prédiction comprend également, entre la sortie de ladite deuxième branche de reconstitution et l'entrée correspondante dudit circuit de combinaison, un circuit de mélange pondéré comprenant lui-même :
(a) un multiplieur de la sortie de ladite première branche qui correspond auxdits coefficients éliminés par le circuit de troncature BF par un coefficient α compris entre 0 et 1 ;
(b) un multiplieur de la sortie de ladite deuxième branche par le coefficient (1-α) ;
(c) un additionneur des sorties desdits multiplieurs, le signal de sortie dudit additionneur étant fourni à ladite entrée correspondante du circuit de combinaison.

10. Dispositif de décodage selon l'une des revendications 7 à 9, caractérisé en ce que ladite fraction déterminée est égale à un quart.

## Patentansprüche

1. Anordnung zum Codieren digitaler Signale entsprechend Fernsehbildern mit einer vorgegebenen Definition, mit folgenden Elementen:
(A) Einer Stufe zum Wählen des Codebetriebs der zu codierenden Signale von momentane Eingangssignalen aus der Coderanordnung einerseits und von auf der Basis der vorangehenden Eingangssignale der Anordnung vorausgesagten Signalen andererseits, wobei die Stufe die zu codierenden Signale und Codebetriebinformation liefert,
(B) Einer Coderstufe,
(C) Einer Bildwiedergewinnungsstufe in einem ersten Weg zum Wiedergewinnen des Bildes entsprechend der vorgegebenen Definition,
(D) Einer Stufe zum Schätzen der Bewegung zwischen Bildern, zur Lieferung von Bewegungsinformation,
(E) Einer Stufe zum Vorhersagen der Ausgangssignale der Vorhersagestufe aus Ausgangssignalen der Bildwiedergewinnungs- und Bewegungsschätzungsstufen, wobei die Vorhersagestufe die abgeleiteten auf die Codebetriebswählstufe übertragenen Signale bildet,
dadurch gekennzeichnet, daß die Digitalsignale als Blöcke mit einer vorgegebenen Abmessung zur Darstellung einer Unterteilung von Bildern betrachtet und unabhängig voneinander behandelt werden, und daß die Bildwiedergewinnungsstufe ebenfalls einen zweiten Bildwiedergewinnungsweg entsprechend einer reduzierten Definition enthält, und dieser Weg parallel zum ersten Weg verläuft, und daß die Vorhersagestufe eine Schaltung zum Wiedergewinnen des Bildes durch die Kombinierung der Ausgangssignale der ersten und zweiten Rekonstruktionswege enthält.

2. Coderanordnung nach Anspruch 1, in der die Coderstufe eine Codekette mit variabler Länge mit einer Orthogonaltransformationsschaltung, einer Abtastkonversionsschaltung, einer Quantisierschaltung, einer Coderschaltung mit variabler Länge, einer Speicherschaltung und mit einer Geschwindigkeitssteuerschaltung ist, und der erste Weg der Rekonstruktionsstufe eine Reihenschaltung folgender Elemente enthält:
(a) Eine invertierte Quantisierschaltung,
(b) Eine invertierte Abtastkonversionsschaltung,
(c) Eine invertierte Orthogonaltransformationsstufe,
(d) Eine Schaltung zum Wiedergewinnen des Signals entsprechend der vorgegebenen Definition, als wäre es nach der Übertragung decodiert, jedoch ohne Übertragungsfehler,
dadurch gekennzeichnet, daß in der Bildwiedergewinnungsstufe der zweite Rekonstruktionsweg folgende Elemente enthält:
(a) Die invertierte Quantisierschaltung,
(b) Die invertierte Abtastkonversionsschaltung,
(c) Eine Abschneidschaltung zum Abnehmen eines vorgegebenen Bruchteils der Signale am Ausgang der invertierten Quantisierschaltung,
(d) Eine invertierte Orthogonaltransformationsschaltung,
(e) Eine Schaltung zum Wiedergewinnen des Signals mit einer reduzierten Definition als wäre es nach der Übertragung decodiert, jedoch ohne Übertragungsfehler,
(f) Einen Speicher zum Speichern des rekonstruierten Signals,
(g) Eine Bewegungsausgleichsschaltung zwischen dem Ausgang des Speichers und der Schaltung zum Wiedergewinnen des Reduktiondefinitionssignals, und daß die Bildwiedergewinnungsschaltung folgende Elemente enthält:
(h) Einen Vervielfacher zum Multiplizieren des Ausgangssignals des ersten Rekonstruktionsweges mit einem Koeffizienten α zwischen 0 und 1,
(i) Einen Vervielfacher zum Multiplizieren des Ausgangssignals des zweiten Rekonstruktionsweges mit dem Koeffizienten (1-α), wobei eine Phasenwiedergewinnungs- und Neuabtastschaltung zwischen dem Ausgang des zweiten Rekonstruktionsweges und dem entsprechenden Eingang des zugeordneten Vervielfachers angeordnet ist,
(j) Einen Addierer zum Addieren der Ausgangssignale der Vervielfacher,
(k) Einen Gewichtungsspeicher zum Speichern des Ausgangssignals des Addierers,
(l) Eine Vorhersageschaltung zum Empfangen des Ausgangssignals aus dem Gewichtungsspeicher und der Bewegungsinformationskomponenten aus der Bewegungsschätzungsstufe.

3. Coderanordnung nach Anspruch 1, in der die Coderstufe eine Codekette mit variabler Länge mit einer Quantisierschaltung, einer Coderschaltung mit variabler Länge, einer Speicherschaltung und einer Geschwindigkeitssteuerschaltung ist, in der die Stufe zum Wählen des Codebetriebs eine Reihenschaltung folgnder Elemente enthält:
(a) Eine Orthogonaltransformationsstufe für die momentane Eingangssignale,
(b) Eine Inter/Zwischenentscheidungsschaltung ebenfalls zum Empfangen der vorausgesagten Signale,
und daß der erste Rekonstruktionsweg eine Reihenschaltung folgender Elementen enthält:
(c) Eine invertierte Quantisierschaltung,
(d) Eine Schaltung zum Wiedergewinnen des Blocks entsprechend der vorgegebenen Definition,
(e) Eine invertierte Orthogonaltransformationsstufe,
(f) Einen Speicher für die Informationskomponenten der vorgegebenen Definition,
dadurch gekennzeichnet, daß in der Wiedergewinnungsstufe der zweite Rekonstruktionsweg folgende Elemente enthält:
(a) Die invertierte Quantisierschaltung,
(b) Eine Abschneidschaltung zum Abnehmen eines vorgegebenen Bruchteils der Signale am Ausgang der invertierten Quantisierschaltung,
(c) Eine Schaltung zum Wiedergewinnen des Blocks entsprechend der reduzierten Definition,
(d) Eine invertierte Orthogonaltransformationsstufe,
(e) Einen Speicher für die Informationskomponenten der reduzierten Definition,
und daß die Bildwiedergewinnungsschaltung folgende Elemente enthält:
(f) am Ausgang des ersten Weges ein erster Wiedergewinnungszweig mit einer ersten Vorhersageschaltung mit Bewegungsausgleich, mit einer ersten Orthogonaltransformationsschaltung und einer Niederfrequenzabschneidschaltung zum Beseitigen eines vorgegebenen Bruchteils als Darstellung der Koeffizienten mit der niedrigsten Frequenz in den Koeffizienten aus der Orthogonaltransformation,
(g) am Ausgang des zweiten Weges ein zweiter Wiedergewinnungszweig mit einer zweiten Vorhersageschaltung mit Bewegungsausgleich und einer zweiten Orthogonaltransformationsschaltung,
(h) eine Schaltung zum Kombinieren der Ausgangssignale der ersten und zweiten Zweige zur Lieferung der abgeleiteten und auf die Codebetriebswählstufe übertragenen Signale.

4. Coderanordnung nach Anspruch 3, dadurch gekennzeichnet, daß die Bildwiedergewinnungsschaltung für die Vorhersagestufe zwischen dem Ausgang des zweiten Wiedergewinnungszweiges und dem entsprechenden Eingang der Kombinationsschaltung eine gewichtete Mischschaltung mit folgenden Elementen enthält:
(a) einen Vervielfacher zum Multiplizieren des Ausgangssignals des ersten Zweiges mit einem Koeffizienten α zwischen 0 und 1, wobei dieses Signal den von der Niederfrequenzabschneidschaltung beseitigten Koeffizienten entspricht,
(b) einen Vervielfacher zum Multiplizieren des Ausgangssignals des zweiten Zweiges mit dem Koeffizienten (1-α),
(c) einen Addierer zum Addieren der Ausgangssignale der Vervielfacher, wobei das Ausgangssignal des Addierers an den entsprechenden Eingang der Kombinationsschaltung gelegt wird.

5. Codieranorndung nach einem der Ansprüche 2 bis 4, dadurch gekennzeichnet, daß der vorgegebene Bruchteil gleich einem Viertel ist.

6. Anordnung zum Decodieren zuvor übertragener und/oder gespeicherter codierter Digitalsignale nach Bearbeitung in einer Anordnung zum Codieren von Digitalsignalen entsprechend Fernsehbildern einer vorgegebenen Definition, wobei die Codieranordnung folgende elemente enthält:
(a) Eine Stufe zum Wählen des Codebetriebs der von den momentanen Eingangssignalen der Coderanordnung einerseits und von vorhergesagten Signalen andererseits codierter Signale auf der Basis der vorangehenden Eingangssignale der Anordnung, wobei die vorangehenden oder momentanen Eingangssignale als Blöcke mit einer vorgegebenen Abmessung als Darstellung einer Unterteilung von Bildern betrachtet und unabhängig voneinander bearbeitet werden,
(b) Eine Coderstufe,
(c) Eine Stufe zum Wiedergewinnen des Bildes entsprechend der vorgegebenen Definition einerseits und entsprechend einer reduzierten Definition andererseits,
(d) Eine Stufe zum Schätzen der Bewegung zwischen Bildern,
(e) Zur Lieferung der vorhergesagten Signale eine Stufe zum Vorhersagen der Informationskomponenten aus den Ausgangssignalen der Bewegungsschätzungs- und Bildwiedergewinnungsstufen, wobei die Informationskomponenten zusätzlich sind und sich relativ zur geschätzten Bewegung zwischen Bildern und zum gewählten Codebetrieb zur Übertragung und/oder Speicherung wie die codierten Signale verhalten,
dadurch gekennzeichnet, daß diese Stufe in Zusammenarbeit mit einer Decoderstufe folgende Elemente enthält:
(A) Eine Stufe zum Wiedergewinnen des Bildes entsprechend der reduzierten Definition aus den decodierten Signalen,
(B) Eine Stufe zum Bewegungsausgleich auf der Basis der zusätzlichen Informationskomponenten,
(C) Eine Stufe zur Vorhersage auf der Basis der Ausgangssignale der Bildwiedergewinnungsstufe.

7. Decoderanordnung nach Anspruch 6, in der die Decoderstufe eine Decoderkette mit variabler Länge für zuvor übertragene und/oder gespeicherte codierte Digitalsignale nach der Bearbeitung in einer Coderkette mit variabler Länge ist, wobei die Decoderkette eine Speicherschaltung, eine Decoderschaltung mit variabler Länge, eine invertierte Quantisierschaltung, eine invertierte Normalisierschaltung, eine invertierte Abtastkonversionsschaltung und eine invertierte Orthogonaltransformationsschaltung enthält, dadurch gekennzeichnet, daß
(A) die Stufe zum Wiedergewinnen des Bildes entsprechend der reduzierten Definition eine Reihenschaltung aus folgenden Elementen enthält:
(a) Einer Abschneidschaltung zum Abnehmen eines vorgegebenen Bruchteils der Signale nach dem Decodieren,
(b) Einer invertierten Orthogonaltransformationsschaltung,
(c) Einem Addierer, dessen erster Eingang das Ausgangssignal aus der invertierten Orthogonaltransformationsschaltung empfängt,
(d) Einem Speicher zum Speichern des entsprechend der reduzierten Definition wiedergewonnenen Bildes am Ausgang des Addierers,
(e) Einer ersten Schaltung zum Ausgleichen von Bewegungen, die das Ausgangssignal des Speichers und die Bewegungsinformationskomponenten empfängt und mit ihrem Ausgang mit dem zweiten Eingang des Addierers angeschlossen ist,
(B) daß die Vorhersagestufe folgende Elemente enthält:
(f) Einen ersten Vervielfacher zum Multiplizieren der Ausgangssignale der Decoderanordnung mit einem Koeffizienten α zwischen 0 und 1,
(g) Einen zweiten Vervielfacher zum Multiplizieren des Ausgangssignals der Stufe zum Wiedergewinnen des Bildes entsprechend der reduzierten Definition mit dem Koeffizienten (1-α), wobei eine Phasenwiederherstellungs- und Neuabtastschaltung zwischen dem Ausgang und dem entsprechenden Eingang des zweiten Vervielfachers angeordnet ist,
(h) Einen Addierer zum Addieren der Ausgangssignale der ersten und zweiten Vervielfacher,
(i) Einen Speicher zum gewichteten Mischen von Bildern entsprechend der vorgegebenen Definition und entsprechend der reduzierten Definition,
(C) daß die Bewegungsausgleichsstufe folgende Elemente enthält:
(j) Eine zweite Bewegungsausgleichsschaltung zum Empfangen des Ausgangssignals der Vorhersagestufe und der zusätzlichen Bewegungs- und Codebetriebsinformationskomponenten,
(k) Einen Addierer zum Addieren der Ausgangssignale der Decoderkette und der zweiten Bewegungsausgleichschaltung.

8. Decoderanordnung nach Anspruch 6, in der die Decoderstufe eine Decoderkette mit variabler Länge für zuvor übertragene und/oder gespeicherte codierte Digitalsignale nach Bearbeitung in einer Coderkette mit variabler Länge ist, wobei die Decoderkette eine Speicherschaltung, eine Decoderschaltung mit variabler Länge, eine invertierte Quantisierschaltung, eine invertierte Normalisierschaltung und eine invertierte Orthogonaltransformationsschaltung enthält, dadurch gekennzeichnet, daß mit einem ersten Speicher zum Speichern von Informationskomponenten entsprechend der vorgegebenen Definition am Ausgang der Decoderkette angeordnet ist,
(A) daß die Stufe zum Wiedergewinnen des Bildes entsprechend der reduzierten Definition eine Reihenschaltung aus folgenden Elementen enthält:
(a) Einer Abschneidschaltung zum Abnehmen eines vorgegebenen Bruchteils der Signale nach dem Decodieren,
(b) Einer Schaltung zum Wiedergewinnen des Blocks entsprechend der reduzierten Definition,
(c) Einer invertierten Orthogonaltransformationsschaltung,
(d) Einem zweiten Speicher zum Speichern von Informationskomponenten entsprechend der reduzierten Definition,
(B) daß die Bewegungsausgleichsstufe erste und zweite Bewegungsausgleichsschaltungen enthält, die je das Ausgangssignal eines der beiden Speicher zum Speichern von Informationskomponenten und zum Speichern des Codebetriebs und der Bewegungsinformationskomponenten empfängt,
(C) daß die Vorhersagestufe folgende Elemente enthält:
(f) Am Ausgang dieser einen der Bewegungsausgleichsschaltungen, die dem Speicher zum Speichern der Informationskomponenten entsprechend der vorgegebenen Definition nachgeschaltet ist, wobei ein erster Wiedergewinnungszweig eine erste Orthogonaltransformationsschaltung und eine Niederfrequenzabschneidschaltung zum Beseitigen eines vorgegebenen Bruchteils als Darstellung der Koeffizienten mit der niedrigsten Frequenz in den Koeffizienten aus der orthogonalen Transformation enthält,
(g) Am Ausgang der anderen der Bewegungsausgleichsschaltungen, die dem Speicher zum Speichern der Informationskomponenten entsprechend der reduzierten Definition nachgeschaltet ist, wobei ein zweiter Wiedergewinnungszweig eine zweite Orthogonaltransformationsschaltung enthält,
(h) Am Ausgang der ersten und zweiten parallel verlaufenden Zweige eine Schaltung zum Kombinieren der Ausgangssignale der ersten und zweiten Zweige,
(i) Einen Addierer zum Addieren der Ausgangssignale der Kombinationsschaltung und der invertierten Quantisierschaltung der Decoderkette mit variabler Länge, zwischen der invertierten Quantisierschaltung und der invertierten Orthogonaltransformationsschaltung nach der letztgenannten Schaltung.

9. Decoderanordnung nach Anspruch 8, dadurch gekennzeichnet, daß die Vorhersagestufe zwischen dem Ausgang des zweiten Wiedergewinnungszweiges und dem entsprechenden Eingang der Kombinationsschaltung ebenfalls eine Gewichtungsmischschaltung mit folgenden Elementen enthält:
(a) einem Vervielfacher zum Multiplizieren des Ausgangssignals des ersten Zweiges mit einem Koeffizienten α zwischen 0 und 1, wobei dieses Signal den von der Niederfrequenzabschneidschaltung beseitigten Koeffizienten entspricht,
(b) einem Vervielfacher zum Multiplizieren des Ausgangssignals des zweiten Zweiges mit dem Koeffizienten (1-α),
(c) einem Addierer zum Addieren der Ausgangssignale der Vervielfacher, wobei das Ausgangssignal des Addierers an den entsprechenden Eingang der Kombinationsschaltung gelegt wird.

10. Decoderanordnung nach einem der Ansprüche 7 bis 9, dadurch gekennzeichnet, daß der vorgegebene Bruchteil gleich einem Viertel ist.

## Claims

1. A device for coding digital signals corresponding to television images having a given definition, comprising:
(A) a stage for selecting the coding mode of signals to be coded from current input signals of the coding device on the one hand and from predicted signals on the other hand, based on the preceding input signals of the device, said stage supplying the signals to be coded and coding mode information;
(B) a coding stage;
(C) an image reconstruction stage in a first path for reconstructing the image in accordance with said given definition;
(D) a stage for estimating the motion between images, supplying motion information;
(E) a stage for predicting from output signals of said image reconstruction and motion estimation stages the output signals of said prediction stage constituting said predicted signals transmitted to said coding mode selection stage,
characterized in that said digital signals are considered as blocks of a given size representing a subdivision of images and being treated independently and in that the image reconstruction stage also comprises a second image reconstruction path in accordance with a reduced definition, which path is situated parallel to said first path, and in that the prediction stage comprises a circuit for reconstituting the image by combining the output signals of said first and second reconstruction paths.

2. A coding device as claimed in Claim 1, in which the coding stage is a variable length coding chain comprising an orthogonal transform circuit, a scanning conversion circuit, a quantizing circuit, a variable length coding circuit, a memory circuit and a rate control circuit and in which the first path of the reconstruction stage comprises a series arrangement of:
(a) an inverse quantizing circuit;
(b) an inverse scanning conversion circuit;
(c) an inverse orthogonal transform stage;
(d) a circuit for reconstructing the signal in accordance with said given definition, as would be decoded after transmission, but for transmission errors;
characterized in that in said image reconstruction stage the second reconstruction path comprises:
(a) said inverse quantizing circuit;
(b) said inverse scanning conversion circuit;
(c) a clipper circuit for taking a given fraction of the signals at the output of said inverse quantizing circuit;
(d) an inverse orthogonal transform circuit;
(e) a circuit for reconstructing the signal having a reduced definition as would be decoded after transmission, but for transmission errors;
(f) a memory for storing said reconstructed signal;
(g) a motion compensation circuit between the output of said memory and said circuit for reconstructing the reduced definition signal;
and in that said image reconstituting circuit comprises:
(h) a multiplier for multiplying the output signal of the first reconstruction path by a coefficient α between 0 and 1;
(i) a multiplier for multiplying the output signal of the second reconstruction path by the coefficient (1-α), a phase restoring and resampling circuit being arranged between said output of the second reconstruction path and the corresponding input of the associated multiplier;
(j) an adder for adding the output signals of said multipliers;
(k) a weighting memory for storing the output signal of said adder;
(l) a prediction circuit for receiving the output signal of said weighting memory and the motion information components supplied by said motion estimation stage.

3. A coding device as claimed in Claim 1, in which the coding stage is a variable length coding chain comprising a quantizing circuit, a variable length coding circuit, a memory circuit and a rate control circuit, in which the stage for selecting the coding mode comprises a series arrangement of:
(a) an orthogonal transform stage for said current input signals;
(b) an inter/intradecision circuit for also receiving said predicted signals; and in which the first reconstruction path comprises a series arrangement of:
(c) an inverse quantizing circuit;
(d) a circuit for reconstituting the block in accordance with said given definition;
(e) an inverse orthogonal transform stage;
(f) a memory for the information components of said given definition; characterized in that in said reconstruction stage the second reconstruction path comprises:
(a) said inverse quantizing circuit;
(b) a clipper circuit for taking a given fraction of the signals present at the output of said inverse quantizing circuit;
(c) a circuit for reconstituting the block in accordance with said reduced definition;
(d) an inverse orthogonal transform stage;
(e) a memory for the information components of said reduced definition; and in that the image reconstitution circuit comprises:
(f) at the output of said first path, a first reconstitution branch comprising a first prediction circuit with motion compensation, a first orthogonal transform circuit and a low-frequency clipper circuit for eliminating, in the coefficients resulting from said orthogonal transform, a given fraction representing the coefficients of the lowest frequency;
(g) at the output of the second path, a second reconstitution branch comprising a second prediction circuit with motion compensation and a second orthogonal transform circuit;
(h) a circuit for combining the output signals of said first and second branches for supplying said predicted signals transmitted to said coding mode selection stage.

4. A coding device as claimed in Claim 3, characterized in that the image reconstitution circuit for the prediction stage comprises, between the output of said second reconstitution branch and the corresponding input of said combination circuit, a weighted mixing circuit comprising:
(a) a multiplier for multiplying the output signal of the first branch by a coefficient α between 0 and 1, which signal corresponds to said coefficients eliminated by the low-frequency clipper circuit ;
(b) a multiplier for multiplying the output signal of said second branch by the coefficient (1-α);
(c) an adder for adding the output signals of said multipliers, the output signal of said adder being applied to the corresponding input of the combination circuit.

5. A coding device as claimed in any one of Claims 2 to 4, characterized in that said given fraction is equal to one quarter.

6. A device for decoding coded digital signals previously transmitted and/or stored after treatment in a device for coding digital signals corresponding to television images of a given definition, said coding device comprising:
(a) a stage for selecting the coding mode of the signals to be coded from current input signals of said coding device on the one hand and from predicted signals on the other hand, based on the preceding input signals of said device, said preceding or current input signals being considered as blocks of a given size representing a subdivision of images and being treated independently;
(b) a coding stage;
(c) a stage for reconstructing the image in accordance with said given definition on the one hand and in accordance with a reduced definition on the other hand;
(d) a stage for estimating the motion between images;
(e) for supplying said predicted signals, a stage for predicting from the output signals of said motion estimation and image reconstruction stages the information components which are additional and relative to the estimated motion between images and to the selected coding mode being intended, like the coded signals, for transmission and/or storage,
characterized in that it comprises, in association with a decoding stage:
(A) a stage for reconstructing the image in accordance with said reduced definition from the decoded signals;
(B) a stage for motion compensation based on said additional information components;
(C) a stage for prediction based on the output signals of said image reconstruction stage.

7. A decoding device as claimed in Claim 6, in which the decoding stage is a variable length decoding chain for coded digital signals previously transmitted and/or stored after treatment in a variable length coding chain, said decoding chain comprising a memory circuit, a variable length decoding circuit, an inverse quantizing circuit, an inverse normalization circuit, an inverse scanning conversion circuit and an inverse orthogonal transform circuit, characterized in that:
(A) the stage for reconstructing the image in accordance with said reduced definition comprises a series arrangement of:
(a) a clipper circuit for taking a given fraction of the signals after decoding;
(b) an inverse orthogonal transform circuit;
(c) an adder whose first input receives the output signal of said inverse orthogonal transform circuit;
(d) a memory for storing the image reconstituted in accordance with the reduced definition and being present at the output of said adder;
(e) a first circuit for compensating motion, receiving the output signal of said memory and the motion information components, and having its output connected to the second input of said adder;
(B) the prediction stage comprises:
(f) a first multiplier for multiplying the output signals of said decoding device by a coefficient α between 0 and 1;
(g) a second multiplier for multiplying the output signal of said stage for reconstructing the image in accordance with said reduced definition by the coefficient (1-α), a phase restoring and resampling circuit being arranged between said output and the corresponding input of said second multiplier;
(h) an adder for adding the output signals of said first and second multipliers;
(i) a memory for weighted mixing of images in accordance with said given definition and in accordance with said reduced definition;
(C) the motion compensation stage comprises:
(j) a second motion compensation circuit receiving the output signal of said prediction stage and the additional motion and coding mode information components;
(k) an adder for adding the output signals of said decoding chain and said second motion compensation circuit.

8. A decoding device as claimed in Claim 6, in which the decoding stage is a variable length decoding chain for coded digital signals previously transmitted and/or stored after treatment in a variable length coding chain, said decoding chain comprising a memory circuit, a variable length decoding circuit, an inverse quantizing circuit, an inverse normalization circuit and an inverse orthogonal transform circuit, characterized in that, with a first memory for storing information components in accordance with said given definition being arranged at the output of said decoding chain,
(A) the stage for reconstructing the image in accordance with said reduced definition comprises a series arrangement of:
(a) a clipper circuit for taking a given fraction of the signals after decoding;
(b) a circuit for reconstituting the block in accordance with said reduced definition;
(c) an inverse orthogonal transform circuit;
(d) a second memory for storing information components in accordance with said reduced definition;
(B) the motion compensation stage comprises first and second motion compensation circuits each receiving the output signal of one of said two memories for storing information components and for storing the coding mode and motion information components;
(C) the prediction stage comprises:
(f) at the output of that one of said motion compensation circuits which follows said memory for storing the information components in accordance with the given definition, a first reconstitution branch comprising a first orthogonal transform circuit and a low-frequency clipper circuit for eliminating, in the coefficients resulting from said orthogonal transform, a given fraction representing the coefficients of the lowest frequency;
(g) at the output of the other one of said motion compensation circuits which follows said memory for storing the information components in accordance with the reduced definition, a second reconstitution branch comprising a second orthogonal transform circuit;
(h) at the output of said first and second parallel branches a circuit for combining the output signals of said first and second branches;
(i) an adder for adding the output signals of said combination circuit and of the inverse quantizing circuit of the variable length decoding chain, arranged between said inverse quantizing circuit and the inverse orthogonal transform circuit following the last-mentioned circuit.

9. A decoding device as claimed in Claim 8, characterized in that the prediction stage also comprises, between the output of said second reconstitution branch and the corresponding input of said combination circuit, a weighted mixing circuit comprising:
(a) a multiplier for multiplying the output signal of said first branch by a coefficient α between 0 and 1, which signal corresponds to said coefficients eliminated by the low-frequency clipper circuit;
(b) a multiplier for multiplying the output signal of said second branch by the coefficient (1-α);
(c) an adder for adding the output signals of said multipliers, the output signal of said adder being applied to said corresponding input of the combination circuit.

10. A decoding device as claimed in any one of Claims 7 to 9, characterized in that said given fraction is equal to one quarter.
